# EUROPÄISCHE PATENTSCHRIFT

(11) **EP 2 208 659 B1**
(45) Veröffentlichungstag und Bekanntmachung des Hinweises auf die Patenterteilung: **13.04.2011**
(21) Anmeldenummer: 09172835.2
(22) Anmeldetag: 13.10.2009
(51) Int. Cl.: B62D 5/04, B62D 6/00

(54) **Aktiver Rücklauf in einem Lenksystem**
Active return in a steering system
Retour actif dans un système de direction

(30) Priorität: 15.01.2009 DE 102009000244
(43) Veröffentlichungstag der Anmeldung: 21.07.2010
(73) Patentinhaber: ZF-Lenksysteme GmbH, 73527 Schwäbisch Gmünd (DE)
(72) Erfinder: Greul, Roland, 73547, Lorch-Waldhausen (DE); Werner, Thomas, 73492, Rainau (DE)

(56) Entgegenhaltungen:
- EP-A1- 1 849 682
- DE-A1-102004 060 030
- DE-A1-102005 054 478

## Beschreibung

Die Erfindung betrifft ein Verfahren zur Realisierung eines aktiven Rücklaufs in einem Lenksystem in einem Fahrzeug, wobei eine Soll-Lenkradwinkelgeschwindigkeit ermittelt wird, die Soll-Lenkradwinkelgeschwindigkeit mit einer ist-Lenkradwinkelgeschwindigkeit verglichen wird und in Abhängigkeit von dem Ergebnis des Vergleichs ein Rückstellmoment bestimmt wird.

Die Erfindung betrifft ferner ein Steuergerät zum Steuern und/oder Regeln einer Lenkvorrichtung in einem Fahrzeug, wobei das Steuergerät eine Funktionalität zur Realisierung eines aktiven Rücklaufs umfasst und wobei zur Realisierung des aktiven Rücklaufs eine Funktionseinheit zur Bestimmung einer Soll-Lenkradwinkelgeschwindigkeit, eine Funktionseinheit zum Vergleichen der Soll-Lenkradwinkelgeschwindigkeit mit einer Ist-Lenkradwinkelgeschwindigkeit und eine Funktionseinheit zur Bestimmung eines Rückstellmoments in Abhängigkeit von dem Ergebnis des Vergleichs in dem Steuergerät ausgebildet sind.

Die Erfindung betrifft auch ein Computerprogramm, das auf einem Steuergerät zur Steuerung und/oder Regelung einer Lenkvorrichtung, insbesondere auf einem Mikroprozessor in dem Steuergerät, ablauffähig ist.

Bei modernen Lenksystemen, beispielsweise elektrischen Servolenkungen oder sogenannten steer-by-wire (SbW) -Lenksystemen, ist es möglich, das tatsächliche Lenkmoment unabhängig von einem durch den Fahrer aufgebrachten Moment vorzugeben beziehungsweise zu beeinflussen. Dieser Freiheitsgrad wird genutzt, um ein als Handmoment bezeichnetes Kraftniveau zu erzeugen, das der von dem Fahrer an einem Lenkrad aufgebrachten Kraft entgegenwirken oder diese Kraft verstärken kann. Damit kann dem Fahrer ein der aktuellen Fahrsituation entsprechendes Fahrgefühl vermittelt werden. Außerdem wird in Abhängigkeit von dem Handmoment dem Fahrer eine Momentenunterstützung bereitgestellt.

Die unabhängige Vorgabe des Lenkmoments ermöglicht es, fahrzustandsabhängig die Gestaltung des Lenkmoments anzupassen. Bei aktuell vom Markt her bekannten Lenksystemen wird dieser Freiheitsgrad unter anderem genutzt, um einen aktiven Rücklauf zu generieren. Hierbei wird in Abhängigkeit von einem aktuellen Lenkradwinkel eine Soll-Lenkradwinkelgeschwindigkeit bestimmt. Dies kann beispielsweise mittels einer geeigneten Funktion oder eines vorgegebenen Modells realisiert werden, wobei sich die Soll-Lenkradwinkelgeschwindigkeit während des Betriebs des Lenksystems beispielsweise mittels eines Kennfeldes bestimmen lässt. Durch Vergleich der Soll-Lenkradwinkelgeschwindigkeit mit der tatsächlich anliegenden Ist-Lenkradwinkelgeschwindigkeit wird schließlich ein Lenkmoment erzeugt, welches eine optimierte Rückstellung des Lenkrads in die Lenkradmittelstellung ermöglicht.

Bewegt sich das Fahrzeug beispielsweise in einer Kurvenfahrt in einem Grenzbereich oder in einem Übergangsbereich zu dem Grenzbereich, so ist eine Rückstellung des Lenkrads in die Lenkradmittelstellung nicht wünschenswert, da die Lenkradmittelstellung in dem Übergangs- oder Grenzbereich nicht einem das Fahrzeug stabilisierenden Lenkradwinkel entspricht. In dem Übergangs- oder Grenzbereich zeigt der stabilisierende, seitenkraftfreie Lenkradwinkel tatsächlich in Richtung des sogenannten Schwimmwinkels des Fahrzeugs. Der Fahrzeugschwimmwinkel bezeichnet hierbei den Winkel zwischen der Längsachse des Fahrzeugs und dem Vektor der tatsächlichen Geschwindigkeit des Fahrzeugs und entspricht damit einem Drehwinkel gegen die Bewegungsrichtung des Fahrzeugs.

Ein Verfahren und eine Vorrichtung gemäβ dem Oberbegriff der Anprüche 1 und 7 ist aus dem Dokument DE 102004 060030 bekannt.

Aufgabe der Erfindung ist es, einen aktiven Rücklauf zu realisieren, bei dem eine Rückstellung des Lenkrads nicht stets zur Lenkradmittelstellung erfolgt, sondern bei dem der Zielwinkel in Abhängigkeit von einer aktuellen Fahrsituation beeinflussbar ist.

Die Aufgabe wird durch ein Verfahren der eingangs genannten Art dadurch gelöst, dass eine aktuelle Zahnstangenkraft ermittelt wird und die Soll-Lenkradwinkelgeschwindigkeit in Abhängigkeit von der aktuellen Zahnstangenkraft bestimmt wird. Die Soll-Lenkradwinkelgeschwindigkeit wird also erfindungsgemäß nicht mehr als Funktion des Lenkradwinkels erzeugt, sondern als Funktion der Zahnstangenkraft. Damit entspricht der Zielwinkel stets dem stabilisierenden, seitenkraftfreien Lenkradwinkel, der in Richtung des Fahrzeugschwimmwinkels zeigt. Dies liegt darin begründet, dass die Zahnstangenkraft in einem Fahrzeug von der aktuellen Seitenkraft maßgeblich beeinflusst wird. Es kann folglich der Zielwinkel implizit als der Winkel bestimmt werden, in dem bei der aktuellen Bewegung des Fahrzeugs keine oder nur geringe Seitenkräfte auftreten würden.

Die Erfassung der Zahnstangenkraft kann beispielsweise mittels eines hierzu geeigneten Sensors Erfolgen. Insbesondere kann die Zahnstangenkraft auch in Abhängigkeit von einem Modell ermittelt werden. Besonders vorteilhaft ist es, wenn ein aktuelles Handmoment und ein von einem Elektromotor aufgebrachtes Lenkmoment zur Bestimmung der Zahnstangenkraft herangezogen werden.

Mittels des erfindungsgemäßen Verfahrens kann die Soll-Lenkradwinkelgeschwindigkeit folglich als Funktion der der Zahnstangenkraft bestimmt werden. Hierbei beschreibt der zumindest implizit bestimmbare Zielwinkel vorteilhafterweise den seitenkraftfreien Winkel.

Um den erfindungsgemäßen aktiven Rücklauf besonders einfach in ein bestehendes Lenksystem, bei dem die Soll-Lenkradwinkelgeschwindigkeit in Abhängigkeit von einem Zielwinkel bestimmt wird, zu implementieren, wird vorteilhafterweise der Zielwinkel explizit in Abhängigkeit von der Zahnstangenkraft derart bestimmt, dass der Zielwinkel den seitenkraftfreien Winkel beschreibt. Durch diesen Zwischenschritt kann in bestehenden Systemen eine möglicherweise als Parameter vorgegebene Lenkradmittelstellung durch den Zielwinkel ersetzt werden.

Eine besonders hohe Genauigkeit ergibt sich dadurch, dass Fahrbahnunebenheiten, die die Zahnstangenkraft beeinflussen, bei der Bestimmung der Soll-Lenkradwinkelgeschwindigkeit unberücksichtigt bleiben. Hierzu kann die Zahnstangenkraft um die Fahrbahnunebenheiten bereinigt werden. Die Soll-Lenkradwinkelgeschwindigkeit wird dann als Funktion der bereinigten Zahnstangenkraft bestimmt. Dadurch wird verhindert, dass Nick-, Roll- und Wankbewegungen, die durch Fahrbahnunebenheiten entstehen, die Soll-Lenkradwinkelgeschwindigkeit und letztlich den dadurch realisierten aktiven Rücklauf ungünstig beeinflussen und beispielsweise von dem Fahrer wahrgenommen werden, was zu Irritationen des Fahrers führen und insbesondere in dem Übergangs- oder Grenzbereich eine erhöhte Gefahr darstellen kann.

Vorzugsweise wird die Zahnstangenkraft in Abhängigkeit von dem in dem Lenksystem wirkenden Lenkmoment bestimmt, also beispielsweise als Funktion beziehungsweise als mathematisches Modell aus einem von dem Fahrer erzeugten Handmoment und einem Motormoment des unterstützenden Elektromotors.

Die Aufgabe wird auch durch ein Steuergerät zum Steuern und/oder Regeln eines Lenksystems der eingangs genannten Art dadurch gelöst, dass das Steuergerät zur Realisierung des erfindungsgemäßen Verfahrens ausgebildet ist. Hierzu können Funktionseinheiten realisiert sein, die die einzelnen Funktionalitäten des erfindungsgemäßen Verfahrens verwirklichen, wobei die Funktionseinheiten nicht notwendig eindeutig identifizierbar sein müssen, sondern ein Zusammenwirken von verschiedenen Funktionseinheiten die Durchführung des erfindungsgemäßen Verfahrens ermöglicht.

Von besonderer Bedeutung ist die Realisierung des erfindungsgemäßen Verfahrens in Form eines Computerprogramms, das auf einem Steuergerät zur Steuerung/Regelung einer Lenkung in einem Fahrzeug und insbesondere auf einem Mikroprozessor in dem Steuergerät ablauffähig ist und zur Ausführung des erfindungsgemäßen Verfahrens programmiert ist. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein optisches, elektrisches oder magnetisches Speichermedium zur Anwendung kommen, beispielsweise eine Digital Versital Disc, eine Festplatte, ein Random-Access-Speicher, ein Read-Only-Speicher oder ein Flash-Speicher.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden. Es zeigen:
- Figur 1: eine schematische Darstellung eines Lenksystems in einem Fahrzeug mit einem erfindungsgemäßen Steuergerät;
- Figur 2: eine schematische Darstellung einzelner Schritte des erfindungsgemäßen Verfahrens gemäß eines Ausführungsbeispiels.

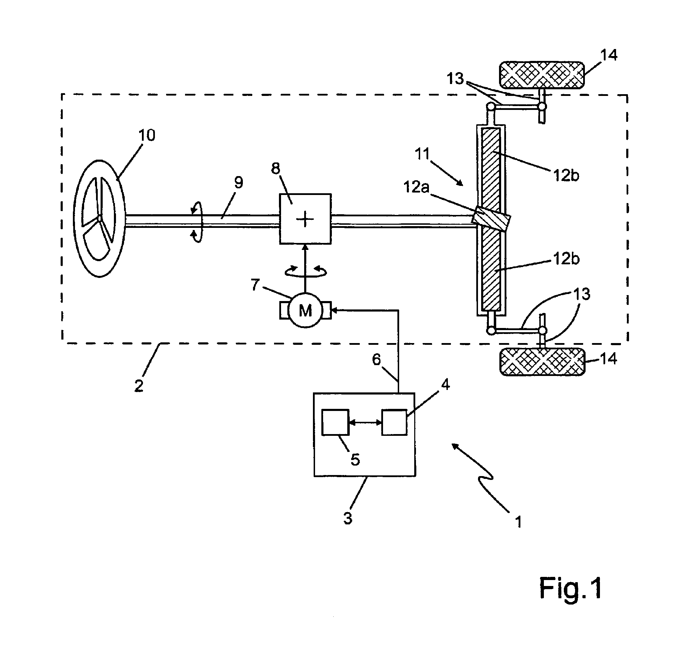

In Figur 1 ist ein Lenksystem 1 dargestellt, das eine Lenkvorrichtung 2 und ein Steuergerät 3 umfasst. In dem Steuergerät 3 ist ein Mikroprozessor 4 angeordnet, der über eine Datenleitung, beispielsweise ein Bussystem, mit einem Speicherelement 5 verbunden ist. Über eine Signalleitung 6 ist das Steuergerät mit einem Momentensteller verbunden, der beispielsweise als Elektromotor 7 ausgebildet ist, so dass eine Steuerung des Elektromotors 7 durch das Steuergerät 3 ermöglicht wird. Der Elektromotor 7 wirkt über ein Getriebe 8 auf einen Drehstab 9. An dem Drehstab 9 ist ein Lenkmittel, beispielsweise ein Lenkrad 10, angeordnet.

Die Lenkvorrichtung 2 weist ferner ein Lenkgetriebe 11 auf, das als Zahnstangenlenkgetriebe ausgebildet ist. Das Lenkgetriebe 11 ist über ein Ritzel 12a und eine Zahnstange 12b auf jeder Fahrzeugseite mit einem Lenkgestänge 13, das jeweils mit einem Rad 14 zusammenwirkt, verbunden.

Das in Figur 1 dargestellte Lenksystem 1 stellt eine von einer Vielzahl möglicher Ausführungsformen von für die Durchführung des erfindungsgemäßen Verfahrens geeigneten Lenksystemen dar. Andere Ausführungsformen können beispielsweise als sogenannte aktive Lenkungen ausgebildet sein sowie einen oder mehrere weitere Winkelsteller aufweisen, die beispielsweise über ein Getriebe mit der Zahnstange 12b zusammenwirken, so dass eine Beeinflussung des über das Lenkrad 10 vorgegebenen Lenkwinkels ermöglicht ist.

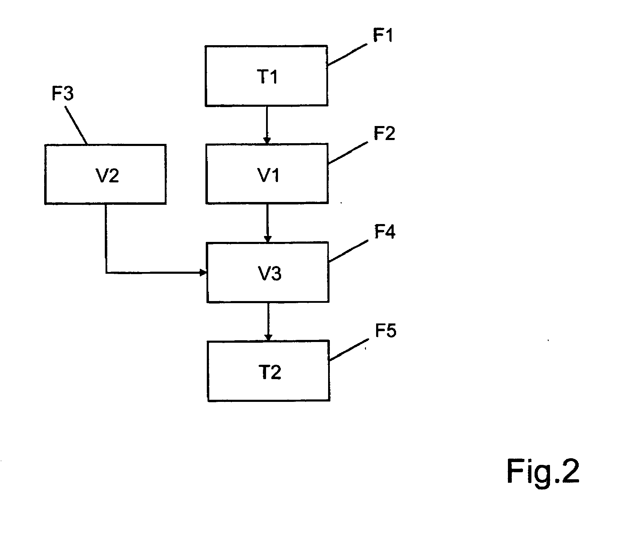

In Figur 2 sind Verfahrensschritte dargestellt, die beispielsweise durch Funktionseinheiten realisiert sind und eine Realisierung des erfindungsgemäßen aktiven Rücklaufs ermöglichen.

In einer Funktionseinheit F1 wird eine aktuelle Zahnstangenkraft T1 ermittelt. Die Zahnstangenkraft T1 kann beispielsweise mittels eines geeigneten Sensors, der an der Zahnstange 12b angebracht ist, ermittelt werden. In einer bevorzugten Ausführungsform wird die Zahnstangenkraft jedoch aus dem von dem Fahrer mittels des Lenkrads 10 erzeugten Handmoments und einem mittels des Elektromotors 7 erzeugten Motormoments unter Berücksichtigung der mittels des Getriebes 8 und des Ritzels 12a realisierten Lenkübersetzung berechnet.

Gemäß einer anderen bevorzugten Ausführungsform wird die Zahnstangenkraft T1 mittels eines mathematischen Ersatz- bzw. Fahrzeugmodells bestimmt.

In einer Funktionseinheit F2 wird eine Soll-Lenkradwinkelgeschwindigkeit V1 als Funktion aus der ermittelten Zahnstangenkraft T1 ermittelt. Hierbei kann vorteilhafterweise eine Kennlinie bzw. ein Kennfeld eingesetzt werden.

In einer Funktionseinheit F3 wird die aktuelle Ist-Lenkradwinkelgeschwindigkeit V2 bestimmt. Diese Größe liegt in modernen Lenksystemen häufig bereits vor, da diese Größe zur Realisierung weiterer Funktionalitäten benötigt wird. In einer Funktionseinheit F4 wird eine Differenz-Lenkradwinkelgeschwindigkeit V3 ermittelt und in einer Funktionseinheit F5 wird in Abhängigkeit von der Differenz-Lenkradwinkelgeschwindigkeit V3 das Lenkmoment T2 für die Realisierung des aktiven Rücklaufs bestimmt. Hierzu kann ebenfalls wieder ein Modell in Form eines Kennfelds herangezogen werden.

Mittels des erfindungsgemäßen Verfahrens wird folglich ein aktiver Rücklauf realisiert, bei dem die Rückstellung nicht zwingend bezüglich der Lenkradmittelstellung erfolgt, sondern bei der der Zielwinkel variabel ist und stets den seitenkraftfreien Winkel realisiert.

Gemäß einer bevorzugten Ausführungsform erfolgt die Bestimmung Rücklaufs in Abhängigkeit von der Zahnstangenkraft nur dann, wenn das Fahrzeug in einem Grenzbereich bewegt wird. Außerhalb des Grenzbereichs wird der Rücklauf in bekannter Weise in Abhängigkeit von dem Lenkwinkel bestimmt.

Selbstverständlich sind eine Vielzahl von unterschiedlichen Ausführungsformen des erfindungsgemäßen Verfahrens beziehungsweise des erfindungsgemäßen Steuergeräts vorstellbar. Beispielsweise kann in einer in Figur 2 nicht dargestellten weiteren Funktionseinheit eine Bereinigung der Zahnstangenkraft T1 um diese beeinflussende Fahrbahnunebenheiten erfolgen. Um die Fahrbahnunebenheiten zu erfassen, können Sensoren vorgesehen sein oder es können statistische Berechungen auf Grundlage der Zahnstangenkraft selbst durchgeführt werden.

Insbesondere ist eine Realisierung der Erfindung nicht an die in Figur 2 beispielhaft dargestellten Funktionseinheiten F1 bis F5 gebunden. Vielmehr können die einzelnen Schritte auch durch mehr oder weniger Funktionseinheiten realisiert werden. Beispielsweise kann vorgesehen sein, mittels eines geeigneten Modells nicht die Zahnstangenkraft explizit zu erzeugen, sondern es kann direkt aus den Eingabegrößen in einem Schritt die Soll-Lenkradwinkelgeschwindigkeit V1 erzeugt werden. Insbesondere ist es vorstellbar, das für den aktiven Rücklauf zu bestimmende Lenkmoment T2 mittels nur eines einzigen Modells zu bestimmen, das beispielsweise als eine Funktion aus der aktuellen Zahnstangenkraft T1 und der aktuellen Ist-Lenkradwinkelgeschwindigkeit V2 bestimmt wird.

## Patentansprüche

1. Verfahren zur Realisierung eines aktiven Rücklaufs in einem Lenksystem in einem Fahrzeug, bei dem eine Soll-Lenkradwinkelgeschwindigkeit (V1) ermittelt wird, die Soll-Lenkradwinkelgeschwindigkeit (V1) mit einer ist-Lenkradwinkelgeschwindigkeit (V2) verglichen wird und in Abhängigkeit von dem Ergebnis des Vergleichs ein Rückstellmoment bestimmt wird, **dadurch gekennzeichnet, dass** eine aktuelle Zahnstangenkraft (T1) ermittelt wird und die Soll-Lenkradwinkelgeschwindigkeit (V1) in Abhängigkeit von der aktuellen Zahnstangenkraft (T1) bestimmt wird.

2. Verfahren nach Anspruch 1, **dadurch gekennzeichnet, dass** zumindest implizit ein Zielwinkel bestimmt wird, wobei der Zielwinkel einen seitenkraftfreien Winkel beschreibt.

3. Verfahren nach Anspruch 1 oder 2, **dadurch gekennzeichnet, dass** die Soll-Lenkradwinkelgeschwindigkeit (V1) in Abhängigkeit von einem Zielwinkel bestimmt wird und der Zielwinkel in Abhängigkeit von der Zahnstangenkraft (T1) derart bestimmt wird, dass der Zielwinkel einen seitenkraftfreien Winkel beschreibt.

4. Verfahren nach einem der vorangehenden Ansprüche, **dadurch gekennzeichnet, dass** bei der Bestimmung der Soll-Lenkradwinkelgeschwindigkeit (V1) die Zahnstangenkraft (T1) beeinflussende Fahrbahnunebenheiten unberücksichtigt bleiben.

5. Verfahren nach Anspruch 4, **dadurch gekennzeichnet, dass** eine um den Einfluss von Fahrbahnunebenheiten bereinigte Zahnstangenkraft ermittelt wird und die Soll-Lenkradwinkelgeschwindigkeit (V1) in Abhängigkeit von der bereinigten Zahnstangenkraft bestimmt wird.

6. Verfahren nach einem der vorangehenden Ansprüche, **dadurch gekennzeichnet, dass** die Zahnstangenkraft (T1) in Abhängigkeit von in dem Lenksystem wirkenden Lenkmomenten bestimmt wird.

7. Steuergerät (3) zum Steuern und/oder Regeln einer Lenkvorrichtung (2) in einem Fahrzeug, wobei das Steuergerät (3) eine Funktionalität zur Realisierung eines aktiven Rücklaufs umfasst und wobei zur Realisierung des aktiven Rücklaufs eine Funktionseinheit zur Bestimmung einer Soll-Lenkradwinkelgeschwindigkeit (V1), eine Funktionseinheit zum Vergleichen der Soll-Lenkradwinkelgeschwindigkeit (V1) mit einer Ist-Lenkradwinkelgeschwindigkeit (V2) und eine Funktionseinheit zur Bestimmung eines Rückstellmoments in Abhängigkeit von dem Ergebnis des Vergleichs in dem Steuergerät (3) ausgebildet sind, **dadurch gekennzeichnet, dass** die Funktionalität zur Realisierung des aktiven Rücklaufs eine Funktionseinheit (F1) zur Ermittlung einer aktuellen Zahnstangenkraft (T1) und eine Funktionseinheit (F5) zur Bestimmung der Soll-Lenkradwinkelgeschwindigkeit (V1) in Abhängigkeit von der aktuellen Zahnstangenkraft (T1) umfasst.

8. Steuergerät nach Anspruch 7, **dadurch gekennzeichnet, dass** das Steuergerät zur Durchführung eines Verfahrens nach einem der Ansprüche 1 bis 6 ausgebildet ist.

9. Computerprogramm, das auf einem Steuergerät (3) zur Steuerung und/oder Regelung einer Lenkvorrichtung (2), insbesondere auf einem Mikroprozessor (4) in dem Steuergerät (3), ablauffähig ist, **dadurch gekennzeichnet, dass** das Computerprogramm zur Durchführung eines Verfahrens nach einem der Ansprüche 1 bis 6 programmiert ist.

10. Computerprogramm nach Anspruch 9, **dadurch gekennzeichnet, dass** das Computerprogramm auf einem Speicherelement (5) abgespeichert ist.

## Claims

1. Method for implementing an active return in a steering system in a vehicle, in which a setpoint steering wheel angle speed (V1) is determined, the setpoint steering wheel angle speed (V1) is compared with an actual steering wheel angle speed (V2), and a restoring torque is determined as a function of the result of the comparison, **characterized in that** a current steering rack force (T1) is determined and the setpoint steering wheel angle speed (V1) is determined as a function of the current steering rack force (T1).

2. Method according to Claim 1, **characterized in that** a target angle is at least implicitly determined, wherein the target angle describes a lateral-force-free angle.

3. Method according to Claim 1 or 2, **characterized in that** the setpoint steering wheel angle speed (V1) is determined as a function of a target angle and the target angle is determined as a function of the steering rack force (T1) in such a way that the target angle describes a lateral-force-free angle.

4. Method according to one of the preceding claims, **characterized in that** irregularities in the carriageway which influence the steering rack force (T1) are not taken into account in the determination of the setpoint steering wheel angle speed (V1).

5. Method according to Claim 4, **characterized in that** a steering rack force which has been adapted in order to remove the influence of irregularities in the carriageway is determined, and the setpoint steering wheel angle speed (V1) is determined as a function of the steering rack force which has been adapted in this way.

6. Method according to one of the preceding claims, **characterized in that** the steering rack force (T1) is determined as a function of steering torques which act in the steering system.

7. Control unit (3) for performing open-loop and/or closed-loop control of a steering device (2) in a vehicle, wherein the control unit (3) comprises a functionality for implementing an active return, and wherein a function unit for determining a setpoint steering wheel angle speed (V1), a function unit for comparing the setpoint steering wheel angle speed (V1) with an actual steering wheel angle speed (V2) and a function unit for determining a restoring torque as a function of the result of the comparison in the control unit (3) are designed to implement the active return, **characterized in that** the functionality for implementing the active return comprises a function unit (F1) for determining a current steering rack force (T1) and a function unit (F5) for determining the setpoint steering wheel angle speed (V1) as a function of the current steering rack force (T1).

8. Control unit according to Claim 7, **characterized in that** the control unit is designed to carry out a method according to one of Claims 1 to 6.

9. Computer program which can run on a control unit (3) for performing open-loop and/or closed-loop control of a steering device (2), in particular on a
microprocessor (4) in the control unit (3), **characterized in that** the computer program is programmed to carry out a method according to one of Claims 1 to 6.

10. Computer program according to Claim 9, **characterized in that** the computer program is stored on a memory element (5).

## Revendications

1. Procédé de réalisation d'un rappel actif dans un système de direction dans un véhicule, selon lequel une vitesse angulaire de consigne du volant de direction (V1) est déterminée, la vitesse angulaire de consigne du volant de direction (V1) est comparée à une vitesse angulaire effective du volant de direction (V2) et un moment de rappel est déterminé en fonction du résultat de la comparaison, **caractérisé en ce qu'**une force de crémaillère (T1) actuelle est déterminée et la vitesse angulaire de consigne du volant de direction (V1) est déterminée en fonction de la force de crémaillère (T1) actuelle.

2. Procédé selon la revendication 1, **caractérisé en ce qu'**au moins un angle cible est déterminé implicitement, l'angle cible décrivant un angle exempt de forces latérales.

3. Procédé selon la revendication 1 ou 2, **caractérisé en ce que** la vitesse angulaire de consigne du volant de direction (V1) est déterminée en fonction d'un angle cible et l'angle cible est déterminé en fonction de la force de crémaillère (T1) de telle sorte que l'angle cible décrive un angle exempt de forces latérales.

4. Procédé selon l'une des revendications précédentes, **caractérisé en ce que**, lors de la détermination de la vitesse angulaire de consigne du volant de direction (V1), les irrégularités de la chaussée qui influencent la force de crémaillère (T1) ne sont pas prises en compte.

5. Procédé selon la revendication 4, **caractérisé en ce qu'**une force de crémaillère épurée de l'influence des irrégularités de la chaussée est déterminée et la vitesse angulaire de consigne du volant de direction (V1) est déterminée en fonction de la force de crémaillère épurée.

6. Procédé selon l'une des revendications précédentes, **caractérisé en ce que** la force de crémaillère (T1) est déterminée en fonction des moments de direction qui agissent dans le système de direction.

7. Contrôleur (3) pour commander et/ou réguler un dispositif de direction (2) dans un véhicule, le contrôleur (3) comprenant une fonctionnalité pour réaliser un rappel actif et, en vue de réaliser le rappel actif, une unité de fonction destinée à déterminer une vitesse angulaire de consigne du volant de direction (V1), une unité de fonction destinée à comparer la vitesse angulaire de consigne du volant de direction (V1) à une vitesse angulaire effective du volant de direction (V2) et une unité de fonction destinée à déterminer un moment de rappel en fonction du résultat de la comparaison sont configurées dans le contrôleur (3), **caractérisé en ce que** la fonctionnalité pour réaliser le rappel actif comprend une unité de fonction (F1) destinée à déterminer une force de crémaillère (T1) actuelle et une unité de fonction (F5) destinée à déterminer la vitesse angulaire de consigne du volant de direction (V1) en fonction de la force de crémaillère (T1) actuelle.

8. Contrôleur selon la revendication 7, **caractérisé en ce que** le contrôleur est configuré pour mettre en oeuvre un procédé selon l'une des revendications 1 à 6.

9. Programme informatique qui peut être exécuté sur un contrôleur (3) en vue de commander et/ou réguler un dispositif de direction (2), notamment sur un microprocesseur (4) dans le contrôleur (3), **caractérisé en ce que** le programme informatique est programmé pour mettre en oeuvre un procédé selon l'une des revendications 1 à 6.

10. Programme informatique selon la revendication 9, **caractérisé en ce que** le programme informatique est enregistré sur un élément de mémorisation (5).
